**Europäisches Patentamt**

(19) **European Patent Office**

**Office européen des brevets**

(11) Numéro de publication: **0 013 195**
**B1**

(12) # FASCICULE DE BREVET EUROPEEN

(45) Date de publication du fascicule du brevet:
**01.12.82**

(21) Numéro de dépôt: **79400869.8**

(22) Date de dépôt: **14.11.79**

(51) Int. Cl.³: **G 01 S 13/66,** G 01 S 13/44,
G 01 S 7/44, F 41 G 5/14

(54) **Dispositif de télémétrie radar air sol pour système de conduite de tir aéroporté et utilisation d'un tel dispositif dans un système de conduite de tir.**

(30) Priorité: **29.12.78 FR 7836961**

(43) Date de publication de la demande:
**09.07.80 Bulletin 80/14**

(45) Mention de la délivrance du brevet:
**01.12.82 Bulletin 82/48**

(84) Etats contractants désignés:
**BE CH DE GB IT NL SE**

(56) Documents cités:
**FR-A-2 378 318**
**GB-A-1 528 739**
**US-A-3 085 243**
**US-A-3 745 574**
**US-A-3 820 119**
**US-A-3 952 304**

(73) Titulaire: **THOMSON-CSF, 173, Boulevard Haussmann,
F-75379 Paris Cedex 08 (FR)**

(72) Inventeur: **Sirven, Jacques, "THOMSON-CSF" -
SCPI 173, bld Haussmann, F-75360 Paris Cedex 08 (FR)**

(74) Mandataire: **Eisenbeth, Jacques Pierre et al,
THOMSON-CSF SCPI 173, Bld Haussmann,
F-75379 Paris Cedex 08 (FR)**

# Dispositif de télémétrie radar air-sol pour système de conduite de tir aéroporté et utilisation d'un tel dispositif dans un système de conduite de tir.

L'invention est relative à un dispositif de télémétrie radar air-sol pour système de conduite de tir aéroporté et à l'utilisation d'un tel dispositif dans un système de conduite de tir. Elle concerne plus particulièrement la mesure de la distance entre un avion et un objectif terrestre.

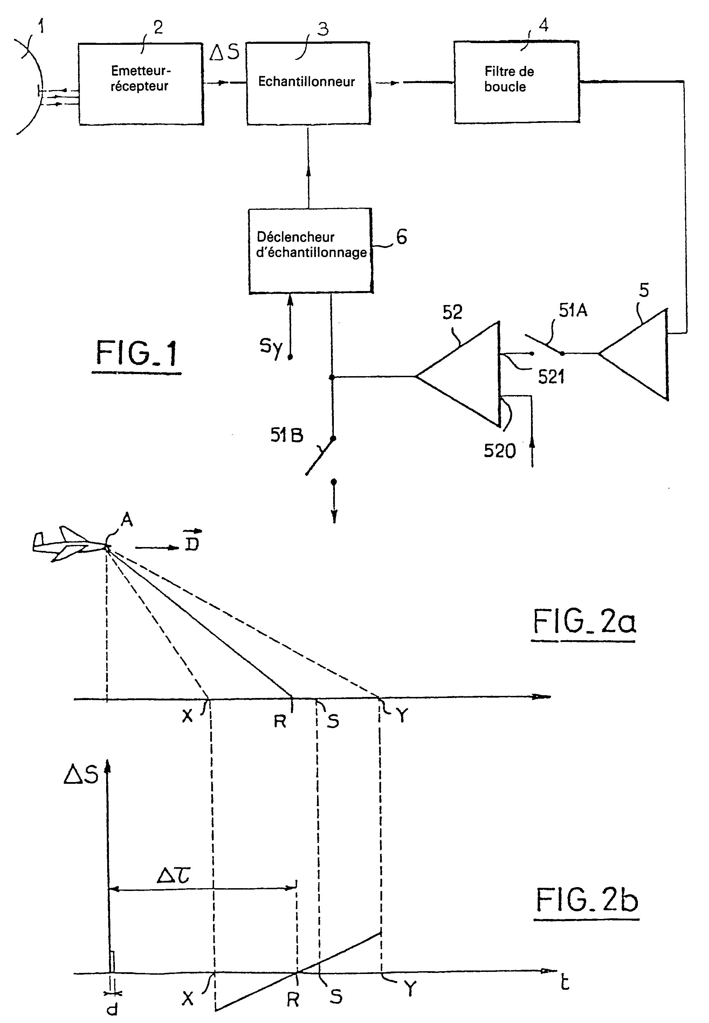

Dans les systèmes de conduite de tir aéroportés, la mesure de la distance entre le porteur, le plus souvent un avion, et un objectif terrestre est un des paramètres nécessaires à la conduite du tir dirigé vers l'objectif terrestre à atteindre. La mesure de la distance entre l'avion et l'objectif peut être faite soit par télémétrie laser, soit par télémétrie radar. Des études précédentes ont été effectuées dans le domaine des mesures de distance air-sol par télémétrie radar, voir en particulier l'article de C.D. Mc Gillem «School of Electrical Engineering Purdue University Lafayette, Ind.», intitulé «Monopulse Radar Air to Ground Ranging» publié dans la revue «IEEE Transactions on Aerospace and Electronic Systems», vol. AES-2 No 3, May 1966, pages 303 à 315. Ces systèmes de télémétrie radar comportent d'habitude, ainsi que représenté fig. 1, un radar d'écartométrie comprenant une antenne 1 et un émetteur-récepteur 2 permettant de délivrer au moins un signal d'écartométrie, écartométrie site $\Delta S$ par exemple, par un opérateur d'écartométrie instantanée inclus dans le récepteur et délivrant ce signal pour chaque récurrence d'émission.

Le système de télémétrie classique comporte une boucle de télémétrie, ou boucle de poursuite en distance, comportant des moyens 3 d'échantillonnage du signal d'écartométrie instantanée et délivrant un signal d'écartométrie échantillonné à un intégrateur 5 par l'intermédiaire d'un filtre de boucle 4. L'intégrateur est relié à un déclencheur 6 d'échantillonnage permettant le déclenchement de l'échantillonneur 3. Le principe de fonctionnement du dispositif de télémétrie air-sol tel que décrit est le suivant.

Au moment où le pilote de l'avion décide d'atteindre un objectif terrestre par un tir, l'antenne 1 du radar est rendue solidaire de l'avion et orientée sensiblement en gisement sur l'axe longitudinal de l'avion. Un marqueur optique permet, par recopie de la position angulaire de l'axe de l'antenne, d'inscrire la position angulaire de l'axe de l'antenne sur le viseur ou collimateur de l'avion. La fig. 2a représente, dans le cas général, une vue de l'avion A éclairant le sol en direction d'un objectif terrestre S, l'antenne étant solidaire de l'avion et orientée sensiblement en gisement sur l'axe longitudinal de l'avion. Ainsi qu'il est représenté fig. 2a, le faisceau d'antenne de l'avion couvre, au sol, un champ d'étendue XY, l'objectif terrestre S étant présumé se trouver, après manœuvre du pilote, sur l'axe du faisceau d'antenne.

La direction de l'axe de l'antenne du radar est donnée par le segment de droite AR. Suivant cet axe, tout point du sol soumis à l'éclairage du faisceau radar donne lieu à un signal d'écartométrie instantanée de valeur nulle. Par contre tous les points du sol situés en avant et en arrière du point R donnent respectivement un signal d'écartométrie instantanée négative et positive par rapport à l'axe AR de l'antenne. La fig. 2b représente, transposé dans le temps du fait du déplacement $\vec{D}$ de l'avion, la forme du signal d'écartométrie instantanée au cours de chaque récurrence. Au moment du tir, l'objectif S visé doit se trouver au point R de l'axe de l'antenne, le signal d'écartométrie instantanée relativement à l'objectif S ayant alors une amplitude nulle; dans ce but, le pilote de l'avion manœuvre pendant une phase d'alignement de façon à maintenir le marqueur optique du viseur sur l'objectif S vu dans le viseur, les directions AR et AS coïncidant alors. La boucle de télémétrie, à partir de ce moment-là, est asservie par commutation d'un interrupteur de boucle 51A en utilisant le signal d'écartométrie instantanée S comme signal d'erreur. La boucle de télémétrie se cale pour que l'entrée de l'intégrateur soit nulle et le déclencheur d'échantillonnage engendre, à partir du signal délivré par l'intégrateur, un signal formé par une fenêtre de distance retardée de $\Delta\tau$ par rapport à l'instant d'émission de la récurrence radar. Ce retard $\Delta\tau$ est représentatif de la distance entre l'avion et l'objectif S défini par un signal d'écartométrie instantanée nul.

Le déclencheur d'échantillonnage 6 est, par exemple, constitué par un comparateur alimenté par le signal délivré par l'intégrateur et par un générateur de dents de scie synchronisé recevant la synchronisation d'émission radar $S_y$.

De plus, la boucle de télémétrie comporte une entrée de prépositionnement 520 sur un sommateur 52, commandée conjointement avec l'interrupteur de boucle 51A par le pilote, de manière à positionner la fenêtre d'échantillonnage dans la zone correspondant à la distance des échos du lobe principal de l'antenne, par exemple. Quand le pilote estime que le pointage est correct, il prélève l'information distance pour le système de conduite de tir par un commutateur 51B.

Des moyens d'entraînement de l'antenne (non représentés fig. 1) permettent, par l'intermédiaire du calculateur de bord et du système de navigation de l'avion (non représentés fig. 1), de maintenir l'antenne solidaire de l'avion et, compte tenu de la manœuvre du pilote pendant la phase d'alignement, de maintenir l'axe de l'antenne, matérialisé par le marqueur, en superposition avec l'objectif terrestre vu dans le viseur.

De tels systèmes de télémétrie radar ne permettent cependant pas des mesures de distance d'une précision comparable à celle des dispositifs de télémétrie laser du fait des petits mouvements de l'avion car l'antenne étant solidaire de l'avion, pendant la phase d'alignement, le marqueur optique du viseur n'est en fait pratiquement jamais en permanence sur l'objectif terrestre dans le viseur. De plus, la boucle de télémétrie nécessitant, notamment au niveau du filtre de boucle, une bande passante relativement importante pour que la boucle de télémétrie puisse suivre les variations de la mesure de distance, cette condition est obtenue au détriment de la précision de la boucle de poursuite pour la mesure de distance. ,

La présente invention permet de remédier aux inconvénients précités et a pour objet un dispositif de télémétrie radar air-sol pour système de conduite de tir aéroporté de précision.

Un autre objet de la présente invention est la mise en œuvre d'un dispositif de télémétrie air-sol pour système de conduite de tir aéroporté permettant de simplifier l'intervention du pilote au cours de la phase dite d'alignement préalable à la conduite automatique de tir.

Selon l'invention, le dispositif de télémétrie radar air-sol pour système de conduite de tir aéroporté comporte un radar d'écartométrie à impulsions. Le radar comprend une antenne mobile et des moyens d'entraînement de l'antenne, un émetteur-récepteur relié à cette antenne comprenant des moyens de mesure angulaire à la direction de l'axe de l'antenne et de la direction d'un objectif au sol par rapport à un viseur. L'émetteur-récepteur délivre en fonctionnement des signaux vidéo d'écartométrie instantanée. Le dispositif de télémétrie radar comporte également une boucle de poursuite en distance de l'objectif comprenant, successivement, des moyens d'échantillonnage par une fenêtre de poursuite en distance des signaux d'écartométrie instantanée, des moyens intégrateurs, et des moyens de déclenchement des moyens d'échantillonnage du signal d'écartométrie instantanée. Le dispositif de télémétrie radar comporte en outre, d'une part, des moyens de commande du pointage de l'axe de l'antenne sur l'objectif par l'intermédiaire des moyens d'entraînement de l'antenne à partir d'un instant to de référence, instant de coïncidence dans le viseur de la direction de l'axe de l'antenne et, d'autre part, des moyens de calcul de la vitesse radiale de l'objectif par rapport à l'avion, lesdits moyens de calcul délivrant, en fonctionnement, aux moyens intégrateur de la boucle de télémétrie, à partir du même instant de référence to, un signal représentatif de la vitesse radiale de l'objectif par rapport à l'avion, ladite boucle de poursuite en distance comportant en outre des moyens de filtrage à bande étroite, l'entrée des moyens intégrateurs de la boucle de poursuite en distance étant, en fonctionnement, connectés sur les moyens de filtrage à bande étroite à partir de ce même instant de référence to.

Un tel dispositif de télémétrie radar peut être utilisé notamment dans tout système de conduite de tir aéroporté, sans préjuger de la nature du porteur, ou dans un système de guidage d'autodirecteurs dans lequel la phase d'alignement peut être effectuée par opérateur automatique.

L'invention sera mieux comprise à l'aide de la description et des dessins ci-après dans lesquels, outre les fig. 1, 2a et 2b représentant respectivement un dispositif de télémétrie radar air-sol selon l'art antérieur, une vue d'un avion A éclairant le sol en direction d'un objectif terrestre S, et le signal d'écartométrie instantanée correspondant délivré par l'émetteur récepteur;

la fig. 3 représente un schéma synoptique de l'objet de l'invention;

la fig. 4 représente un mode de réalisation particulier de l'objet de l'invention;

la fig. 5 représente une représentation schématique non limitative des différents référentiels du dispositif selon l'invention.

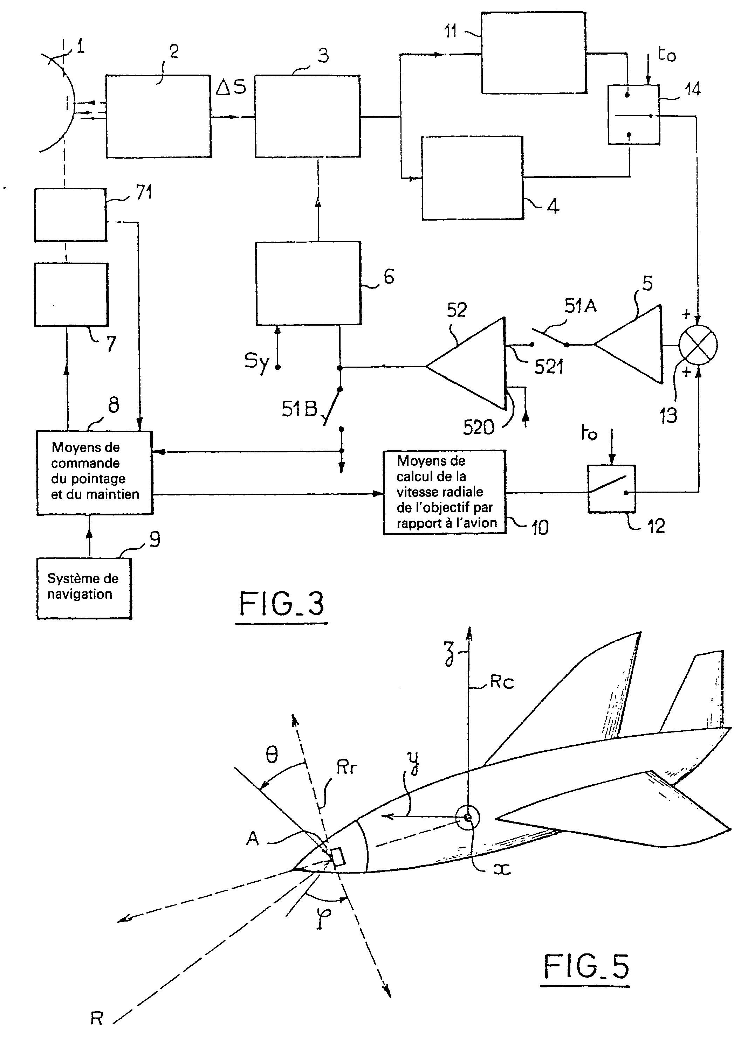

Selon la fig. 3, le dispositif de télémétrie radar objet de l'invention comporte un radar d'écartométrie à impulsions comprenant une antenne mobile 1 et des moyens d'entraînement de cette antenne. Un émetteur-récepteur 2 est relié à l'antenne 1 et délivre à l'émission des impulsions de durée d et de période de répétition τ. L'émetteur-récepteur comprend des moyens de mesure angulaire de la direction de l'axe de l'antenne 2 et de la direction d'un objectif au sol repéré par rapport à un viseur. Le radar est avantageusement constitué par un radar du type monopulse dont le récepteur délivre au moins des signaux d'écartométrie instantanée tels que, par exemple, un signal d'écartométrie site ΔS.

Le dispositif de télémétrie comporte en outre une boucle de télémétrie, ou boucle de poursuite en distance de l'objectif au sol, comprenant successivement des moyens d'échantillonnage 3 par une fenêtre de poursuite en distance des signaux vidéo d'écartométrie, des moyens intégrateurs 5, et des moyens de déclenchement 6 des moyens d'échantillonnage. Un interrupteur 51A et un sommateur 52 permettent un prépositionnement de la fenêtre d'échantillonnage dans la zone de réception correspondant à la distance des échos du lobe principal d'antenne, par exemple par ouverture de l'interrupteur 51A pendant la phase de prépositionnement et fermeture de cet interrupteur après cette même phase.

Selon l'invention, le dispositif de télémétrie radar comporte en outre des moyens de commande, à partir d'un instant to de référence, instant de coïncidence de la direction de l'axe de l'antenne et de la direction de l'objectif terrestre repérée par rapport au viseur, du pointage et du maintien de l'axe de l'antenne sur l'objectif terrestre, l'antenne étant dès cet instant désolidarisée de l'avion par l'intermédiaire des moyens d'entraînement de l'antenne 7. A cet effet, les moyens de commande 8 permettent d'élaborer, à partir d'informations délivrées par le système de navigation 9 de l'avion et de l'information distance de l'objectif terrestre délivrée par l'intégrateur 5 par l'intermédiaire du sommateur 52, et après déclenchement à l'instant to, des signaux de commande des moyens d'entraînement 7 tenant compte des mouvements rapides de l'avion en vue du maintien du pointage de l'axe de l'antenne dans la direction de l'objectif terrestre. Le dispositif de télémétrie objet de l'invention comporte en outre des moyens de calcul 10 de la vitesse radiale de l'objectif terrestre par rapport à l'avion. Les moyens de calcul délivrent, en fonctionnement, à l'intégrateur 5 de la boucle de télémétrie, à partir du même instant de référence to, par l'intermédiaire d'un commutateur 12 et d'un sommateur 13, un signal représentatif de la vitesse radiale de l'objectif par rapport à l'avion. La boucle de télémétrie comporte en outre des moyens de filtrage 11 à bande étroite connectés à la place des moyens 4 de filtrage à bande large par l'intermédiaire d'un commutateur 14, l'intégrateur 5 de la boucle de télémétrie étant, en fonctionnement, commuté sur les moyens de filtrage à partir de ce même instant de référence to.

Le fonctionnement du dispositif de télémétrie représenté fig. 3 est le suivant.

Quand l'antenne est pointée correctement sur l'objectif terrestre, pointage dont l'appréciation est laissée au pilote, l'ensemble des circuits constitués par le circuit de commande 8 reçoit, compte tenu des informations données par le système de navigation 9 de l'avion et dès l'instant de référence to défini par le pilote, l'écart de pointage de l'axe de l'antenne par rapport à un repère lié à l'avion à cet instant de référence to.

La commande d'échantillonnage de la fenêtre de distance indique, en temps de retard par rapport au début de l'impulsion d'émission radar, la distance entre l'objectif terrestre et l'avion. Ces données permettent, dans le circuit de commande 8, de déterminer la position initiale de l'objectif terrestre par rapport à un repère lié à l'avion à l'instant to. Les moyens de commande 8 permettent de commander des moyens d'entraînement 7 de l'antenne à partir des informations délivrées par le système de navigation aérienne de l'avion, de manière que le pointage de l'antenne en direction de l'objectif terrestre reste correct.

L'alimentation de l'intégrateur 5 par le circuit de calcul 10 de la vitesse radiale de l'objectif terrestre permet de tenir compte de cette information au niveau de la boucle de télémétrie et, de ce fait, de réduire la bande passante de la boucle de télémétrie par commutation de l'entrée de l'intégrateur 5 sur les moyens de filtrage à bande étroite, l'erreur de traînage de la boucle admissible pouvant être plus importante du fait de l'introduction de l'information vitesse radiale de l'objectif terrestre au niveau de l'intégrateur 5 et la boucle de télémétrie n'ayant pas, de ce fait, à compenser les variations rapides du paramètre vitesse radiale de l'objectif introduit du niveau de l'intégrateur 5. Le signal délivré par l'échantillonneur représente alors l'erreur de compensation du paramètre vitesse radiale délivré par les moyens de calcul 10. Cette erreur sur le calcul de la vitesse radiale présente des variations lentes, ce qui autorise une bande passante étroite de la boucle de télémétrie et la commutation sur les moyens de filtrage 11 à bande étroite.

Les moyens de filtrage à bande étroite sont constitués, par exemple, par un intégrateur à faible constante de temps ou par un dispositif atténuateur de gain inférieur au gain des moyens de filtrage à bande large.

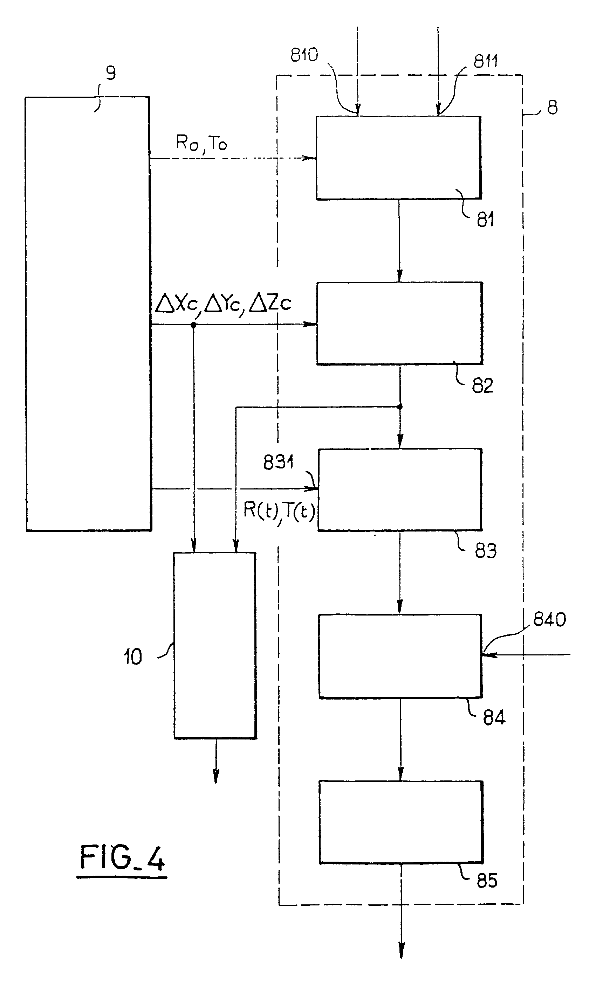

Selon un détail de réalisation de l'invention représenté fig. 4, les moyens de commande 8 comprennent des premiers moyens de calcul 81 de la position initiale de l'objectif terrestre à l'instant de référence to.

Ces premiers moyens de calcul 81 permettent, à partir de l'information de distance délivrée par la boucle de télémétrie, issue de la sortie de l'intégrateur 5 par exemple, et reçue sur une entrée 810, et d'une entrée 811 recevant d'un senseur de position 71 (fig. 3) les paramètres de pointage de l'antenne à l'instant de référence to, de calculer, compte tenu de ces angles de pointage de l'antenne par rapport à l'avion délivrés par exemple en coordonnées sphériques site et gisement $\tau$, $\varphi$, les coordonnées de l'objectif terrestre par rapport à un référentiel lié à l'avion. Cette position est obtenue à partir de la position initiale à l'instant de référence to défini par le pilote.

Ces premiers moyens de calcul délivrent sur une sortie les coordonnées de position de l'objectif terrestre à des deuxièmes moyens de calcul 82 de la position de l'objectif terrestre à un instant t, défini à compter de l'instant de référence to, ce calcul étant effectué à partir des variations des paramètres d'attitude de l'avion ou paramètres de vitesse délivrés par la centrale à inertie de l'avion. Les deuxièmes moyens de calcul 82 délivrent les informations relatives aux coordonnées de l'objectif à l'instant t à une entrée de troisièmes moyens de calcul 83 de la direction de l'objectif terrestre dans un référentiel lié à l'avion.

Les troisièmes moyens de calcul 83 de la direction de l'objectif terrestre dans le référentiel lié à l'avion délivrent sur une sortie les informations nécessaires à la commande des moyens d'entraînement 7 de l'antenne, de manière que le pointage de l'axe de l'antenne reste orienté dans la direction de l'objectif terrestre, compte tenu des paramètres d'attitude de l'avion R(t), T(t) à l'instant t reçus sur une entrée 831 reliée à la centrale à inertie 9.

Selon la fig. 4, les moyens de commande comportent en outre, en cascade avec les troisièmes moyens de calcul, des moyens de correction manuelle 84 des moyens d'entraînement de l'antenne; les moyens de correction comprenant une entrée de commande manuelle 840 par laquelle le pilote peut modifier le pointage réel de l'antenne, le contrôle de la modification de pointage pouvant être effectué visuellement au niveau de la position correspondante du marqueur optique sur le viseur. Les moyens de commande comportent en outre, en cascade avec les moyens de correction manuelle, des moyens 85 de correction des aberrations du radôme protégeant l'antenne du radar. Ces moyens de correction sont constitués par exemple par une mémoire morte programmée.

Le fonctionnement des moyens de commande peut être explicité comme suit, selon un exemple de réalisation non limitatif des référentiels du dispositif selon l'invention représenté fig. 5. La centrale à inertie 9 délivre les paramètres relatifs à l'attitude de l'avion par rapport à un premier référentiel cartésien Rc dont l'origine est par exemple liée à la centrale à inertie elle-même.

Les paramètres d'attitude de l'avion sont mesurés par les angles de roulis R et de tangage T repérés par rapport au référentiel Rc.

Les paramètres radar site, gisement et distance sont mesurés par rapport à un référentiel Rr lié à l'avion.

La centrale à inertie 9 délivre les projections $\Delta Xc$, $\Delta Yc$, $\Delta Zc$ du vecteur vitesse de l'avion dans le référentiel Rc. Les paramètres d'attitude de l'avion aux instants to et t ont respectivement pour valeurs Ro, To et R(t), T(t) valeurs de l'angle de roulis et de l'angle de tangage aux instants to et t.

Les paramètres de pointage de l'antenne ou paramètres radar en site et en gisement aux instants to et t ont pour valeur respectivement $\tau$o, $\varphi$o et $\tau(t)$, $\varphi(t)$.

Les premiers moyens de calcul 81 délivrent, à partir des paramètres d'attitude de l'avion Ro, To et des paramètres radar $\tau$o, $\varphi$o, Do à l'instant to où Do représente la distance de l'objectif à ce même instant to, la position de l'objectif Xo, Yo, Zo dans le référentiel Rc. La valeur des paramètres de position de l'objectif Xo, Yo, Zo, dans le référentiel Rc est donnée par la relation I :

$$I \begin{pmatrix} Xo \\ Yo \\ Zo \end{pmatrix} = \begin{pmatrix} \cos To & o & -\sin To \\ o & 1 & o \\ \sin To & o & \cos To \end{pmatrix}$$

$$\begin{pmatrix} 1 & o & o \\ o & \cos Ro & -\sin Ro \\ o & -\sin Ro & \cos Ro \end{pmatrix} \begin{pmatrix} Do \cdot \cos \theta o \cdot \cos \varphi o \\ Do \cdot \cos \theta o \cdot \sin \varphi o \\ Do \cdot \sin \theta \end{pmatrix}$$

Les moyens de calcul 82 calculent la position du but à l'instant tx(t), Y(t), Z(t) dans le référentiel Rc, les paramètres de position X(t), Y(t), Z(t) dans le référentiel Rc. Les paramètres de position X(t), Y(t), Z(t) sont donnés par la relation II :

$$II \begin{pmatrix} X(t) \\ Y(t) \\ Z(t) \end{pmatrix} = \begin{pmatrix} Xo \\ Yo \\ Zo \end{pmatrix} \begin{pmatrix} \int_o^t \Delta Xc\, dt \\ \int_o^t \Delta Yc\, dt \\ \int_o^t \Delta Zc\, dt \end{pmatrix}$$

Les moyens de calcul 83 calculent la direction du but $\tau(t)$ et $\varphi(t)$ à l'instant t.

Les paramètres de direction du but $\tau(t)$ et $\varphi$ mesurés dans le référentiel radar Rr sont donnés par la relation III :

$$\begin{pmatrix} Xr(t) \\ Yr(t) \\ Zr(t) \end{pmatrix} = \begin{pmatrix} 1 & o & o \\ o & \cos R(t) & \sin R(t) \\ o & -\sin R(t) & \cos R(t) \end{pmatrix}$$

$$\begin{pmatrix} \cos T(t) & o & \sin T(t) \\ o & 1 & o \\ -\sin T(t) & o & \cos Z(t) \end{pmatrix} \begin{pmatrix} X(t) \\ Y(t) \\ Z(t) \end{pmatrix}$$

et par la relation IV :

$$\theta(t) = \text{Arctg} \frac{Zr(t)}{\sqrt{Yr^2(t) + Xr^2(t)}}$$

$$\varphi(t) + \text{Arctg} \frac{Yr(t)}{Zr(t)}.$$

Les signaux relatifs à la direction du but ou objectif $\tau(t)$, $\varphi(t)$ délivrés par les troisièmes moyens de calcul 83 permettent la commande des moyens d'entraînement de l'antenne 7. Ces moyens d'entraînement de l'antenne, qui sont constitués par des servomoteurs site et gisement, ne sont pas décrits en détail car ils sont bien connus de l'homme de l'art.

Selon la fig. 4, les moyens de calcul de la vitesse radiale de l'objectif par rapport à l'avion calculent la projection de la vitesse de l'objectif projetée sur la ligne de visée AR, produit scalaire des composantes de la vitesse de l'objectif par les cosinus directeurs de la ligne de visée AR.

$$Vr = \begin{pmatrix} \Delta Xc \\ \Delta Yc \\ \Delta Zc \end{pmatrix} \begin{pmatrix} X(t) \\ Y(t) \\ Z(t) \end{pmatrix} \times \frac{1}{\sqrt{X^2(t) + Y^2(t) + Z^2(t)}}$$

Les premiers, deuxièmes et troisièmes moyens de calcul 81, 82, 83 et le circuit de calcul de la projection de la vitesse sur la ligne de visée sont constitués, par exemple, par tout circuit de calcul permettant de réaliser les opérations précédemment décrites et, de préférence, par les circuits ou opérateurs de calcul du calculateur de bord de l'avion.

## Revendications

1. Dispositif de télémétrie radar air-sol pour système de conduite de tir aéroporté comportant un radar d'écartométrie à impulsions comprenant une antenne mobile (1) et des moyens d'entraînement de l'antenne (7), un émetteur-récepteur (2) relié à cette antenne comprenant des moyens de mesure angulaire de la direction de l'axe de l'antenne et de la direction d'un objectif au sol repéré par rapport à un viseur et délivrant des signaux vidéo ($\Delta S$) d'écartométrie instantanée, le dispositif de télémétrie radar comportant également une boucle de poursuite en distance de l'objectif comprenant, successivement, des moyens d'échantillonnage (3) par une fenêtre de poursuite en distance des signaux d'écartométrie instantanée, des moyens de filtrage (4) à bande large des signaux échantillonnés, des moyens intégrateurs (5) et des moyens de déclenchement (6) des moyens d'échantillonnage du signal vidéo d'écartométrie, caractérisé en ce que le dispositif comporte en outre, d'une part, des moyens de commande (8) du pointage et du maintien de l'axe de l'antenne sur l'objectif par l'intermédiaire des moyens d'entraînement de l'antenne à partir d'un instant to de référence, instant de coïncidence de la direction de l'axe de l'antenne et de la direction de l'objectif repérée par rapport au viseur et, d'autre part, des moyens de calcul (10) de la vitesse radiale de l'objectif par rapport à l'avion, lesdits moyens de calcul délivrant en fonctionnement aux moyens intégrateurs (5) de la boucle de poursuite en distance, à partir du même instant de référence to, un signal représentatif de la vitesse radiale de l'objectif par rapport à l'avion.

2. Dispositif de télémétrie selon la revendication 1, caractérisé en ce que la boucle de poursuite en distance comporte en outre des moyens de filtrage (11) à bande étroite, l'entrée des moyens d'intégration (5) de la boucle de poursuite en distance étant en fonctionnement commutée sur les moyens de filtrage à bande étroite à partir de ce même instant de référence to.

3. Dispositif de télémétrie selon la revendication 2, caractérisée en ce que les moyens de filtrage à bande étroite sont constitués par un intégrateur à faible constante de temps.

4. Dispositif de télémétrie selon la revendication 2, caractérisé en ce que les moyens de filtrage à bande étroite sont constitués par un dispositif atténuateur de gain inférieur aux moyens de filtrage à bande large.

5. Dispositif de télémétrie selon la revendication 1, caractérisé en ce que les moyens de commande (8) du pointage de l'axe de l'antenne sur l'objectif à partir d'un instant to de référence, instant de coïncidence de la direction de l'axe de l'antenne et de la direction de l'objectif par rapport au viseur, comportent:

— des premiers moyens de calcul (81) de la position initiale de l'objectif à l'instant de référence to, ces premiers moyens de calcul délivrant, compte tenu des angles de pointage de l'antenne à l'instant de référence to et des informations d'attitude de l'avion par rapport à un référentiel lié à l'avion, les coordonnées de l'objectif terrestre par rapport à ce référentiel;

— des deuxièmes moyens de calcul (82) de la position de l'objectif à partir de l'instant de référence to, ces deuxièmes moyens de calcul délivrant, en fonctionnement, des informations relatives aux coordonnées de l'objectif terrestre à l'instant t;

— des troisièmes moyens de calcul (83) de la direction de l'objectif terrestre dans le référentiel lié à l'avion.

6. Dispositif de télémétrie selon la revendication 5, caractérisé en ce que les moyens de commande comportent en outre, en cascade avec les troisièmes moyens de calcul (83) des moyens de correction (84) des moyens d'entraînement, ces moyens de correction comprenant une entrée de commande manuelle.

7. Dispositif de télémétrie selon la revendication 6, caractérisé en ce que les moyens de commande comportent en outre, en cascade avec les moyens de correction (84) comprenant une entrée de commande manuelle, des moyens de correction (85) des aberrations du radôme de protection de l'antenne (1) du radar.

8. Dispositif de télémétrie selon la revendication 7, caractérisé en ce que les moyens de correction des aberrations du radôme sont constitués par une mémoire morte programmée.

9. Utilisation du dispositif de télémétrie selon l'une des revendications précédentes, dans un système de conduite de tir.

## Claims

1. An air-to-ground radar device for an airborne firing control system comprising a range-measuring impulse radar including a movable antenna (1) and means (7) for driving the antenna, a transceiver (2) connected to said antenna, comprising means for angularly measuring the direction of the axis of the antenna and the direction of a target located on the ground with respect to a view-finder and delivering instantaneous range-measuring video signal ($\Delta S$), said telemetric radar device further comprising a remote target following loop including, in succession, sampling means (3) for sampling by means of a remote following window instantaneous range-measuring signals, wide-band filtering means (4) for filtering the sampled signals, integrating means (15) and triggering means (6) for triggering the distant range-measuring video signal sampling means, characterized in that said device further comprises, on the one hand, control means (8) for controlling the aiming and maintaining the axis of the antenna toward the target through the intermediary of the antenna driving means, from a reference moment to at which the direction of the antenna axis coincides with the direction of the target as located with respect to the view-finder and, on the other hand, computing means (10) for computing the radial speed of the target with respect to the airplane, said computing means delivering, during operation, to the integrating means (5) of the remote following loop a signal representing the radial speed of the target with respect to the airplane, from the said reference moment to.

2. A telemetric device according to claim 1, characterized in that the remote following loop further comprises narrow-band filtering means (11), the input connection of the integrating means (5) of the remote following loop being switched over, during operation thereof, to said narrow-band filtering means, from the said reference moment to.

3. A telemetric device according to claim 2, characterized in that the narrow-band filtering means are constituted by an integrator having a small time constant.

4. A telemetric device according to claim 2, characterized in that the narrow-band filtering means are constituted by an attenuating device having a gain smaller than that of the wide-spread filtering means.

5. A telemetric device according to claim 1, characterized in that the control means (8) for aiming the antenna axis to the target from a reference moment to which corresponds to the coincidence of the direction of the antenna axis with the direction of the target with respect to the view-finder comprise:

— first computing means (81) for computing the initial position of the target at said reference moment to, said first computing means delivering, while taking into account the aiming angles of the antenna at said reference moment to as well as information concerning the attitude of the airplane relative to a reference system connected to the airplane, the coordinates of the ground target with respect to said reference system;

— second computing means (82) for computing the position of the target from said reference moment to, said second computing means delivering during operation information concerning the coordinates of the ground target at said moment to;

— third computing means (83) for computing the direction of the ground target within said reference system connected to the airplane.

6. A telemetric device according to claim 5, characterized in that the control means further comprise, in cascade with the third computing means (83), correcting means (84) for correcting the driving means, said correcting means comprising a manual control input.

7. A telemetric device according to claim 6, characterized in that the control means further comprise, in cascade with the correction means (84) including a manual control input, correction means (85) for correcting the aberrations of the protecting radome of the radar antenna (1).

8. A telemetric device according to claim 7, characerized in that the means for correcting the radome aberrations are constituted by programmed dead memory.

9. The utilisation of the telemetric device according to any one of the preceding claims in a firing control system.


## Patentansprüche

1. Bord-Boden-Radarfernmessgerät für ein Flugzeug-Bordzielsystem mit einem Impuls-Entfernungsmessradar, der eine bewegliche Antenne (1), Antriebsmittel (7) für die Antenne und eine mit derselben verbundene Sende- und Empfangsvorrichtung aufweist, welche Mittel zur Winkelmessung der Richtung der Antennenachse und der Richtung eines am Boden beobachteten Ziels in bezug auf einen Sucher besitzt und unverzögerte Entfernungsmess-Videosignale (ΔS) erzeugt, wobei das Radarfernmessgerät ferner eine Entfernungs-Zielfolgeschleife mit hintereinander angeordneten Mitteln zur Bemusterung der unverzögerten Videosignale vermittels eines Entfernungs-Zielfolgefensters, mit Breitband-Filtermitteln (4) für die bemusterten Signale Integriermitteln (5) sowie mit Mitteln (6) zum Auslösen der Entfernungsmess-Videosignal-Bemusterungsmittel, dadurch gekennzeichnet, dass das Gerät ferner einerseits Mittel (8) aufweist zum Ausrichten und Festlegen der Antennenachse in bezug auf das Ziel vermittels der Antennenantriebsmittel von einem Bezugszeitpunkt to ab, zu welchem die Antennenachsenrichtung in bezug auf den Sucher mit der Richtung des beobachteten Ziels zusammenfällt, und andererseits Rechenmittel (10) zur Berechnung der Radialgeschwindigkeit des Ziels in bezug auf das Flugzeug besitzt, wobei diese Rechenmittel während des Betriebes die Integriermittel (5) der Entfernungs-Folgeschleife von diesem Bezugszeitpunkt to ab mit einem der Radialgeschwindigkeit des Zieles in bezug auf das Flugzeug entsprechenden Signal speisen.

2. Fernmessgerät nach Anspruch 1, dadurch gekennzeichnet, dass die Entfernungs-Folgeschleife ferner Schmalband-Filtermittel (11) aufweist, wobei der Eingang der Integriermittel (5) der Entfernungs-Folgeschleife beim Betrieb von dem genannten Bezugszeitpunkt to ab auf die Schmalband-Filtermittel geschaltet wird.

3. Fernmessgerät nach Anspruch 2, dadurch gekennzeichnet, dass die Schmalband-Filtermittel aus einem Integrator mit niedriger Zeitkonstante bestehen.

4. Fernmessgerät nach Anspruch 2, dadurch gekennzeichnet, dass die Schmalband-Filtermittel aus einer Dämpfvorrichtung bestehen, deren Verstärkungsfaktor kleiner ist als derjenige der Breitband-Filtermittel.

5. Fernmessgerät nach Anspruch 1, dadurch gekennzeichnet, dass die Ausrichtmittel (8) zum Ausrichten der Antennenachse auf das Ziel von einem Bezugszeitpunkt to ab, zu welchem die Richtung der Antennenachse mit derjenigen des Zieles in bezug auf den Sucher zusammenfällt, aufweisen:

— erste Rechenmittel (81) zur Berechnung der anfänglichen Lage des Zieles zum Bezugszeitpunkt to, wobei diese ersten Rechenmittel unter Zugrundelegung der Zielwinkel der Antenne zum Bezugszeitpunkt to und der Angaben bezüglich der Lage des Flugzeugs in bezug auf ein vom Flugzeug abhängiges Bezugssystem die Koordinaten des Bodenzieles in bezug auf dieses Bezugssystem liefern;

— zweite Rechenmittel (82) zum Berechnen der Lage des Zieles am Bezugszeitpunkt to ab, wobei diese zweiten Rechenmittel im Betreib Angaben betr. der Koordinaten des Bodenzieles zum Zeitpunkt t liefern;

— dritte Rechenmittel (83) zum Berechnen der Richtung des Bodenzieles innerhalb des vom Flugzeug abhängigen Bezugssystems.

6. Fernmessgerät nach Anspruch 5, dadurch gekennzeichnet, dass die Ausrichtmittel ferner in Kaskadenschaltung mit den dritten Rechenmitteln angeordnete Korrekturmittel (84) für die Antriebsmittel aufweisen, welche Korrekturmittel einen Eingang für manuelle Bedienung besitzen.

7. Fernmessgerät nach Anspruch 6, dadurch gekennzeichnet, dass die Ausrichtmittel ferner in Kaskadenschaltung mit den einen Eingang für manuelle Bedienung aufweisenden Korrekturmitteln (84) angeordnete Aberrationskorrekturmittel (85) zum Korrigieren der Radar-Antennenschutzverkleidungs-Aberrationen besitzen.

8. Fernsmessgerät nach Anspruch 7, dadurch gekennzeichnet, dass die Antennenschutzverkleidungs-Aberrationskorrekturmittel aus einem programmierten stillen Speicher bestehen.

9. Anwendung des Fernmessgerätes nach einem der vorstehenden Ansprüche in einem Zielsystem.

FIG_1

FIG_2a

FIG_2b

9

0 013 195

FIG_3

FIG_5

11

$$R_o, T_o$$

$$\triangle X_c, \triangle Y_c, \triangle Z_c$$

$$R(t), T(t)$$

FIG_4